# EUROPEAN PATENT APPLICATION

(11) **EP 4 764 056 A1**
(43) Date of publication of application: **24.06.2026**
(21) Application number: 25216957.8
(22) Date of filing: 19.11.2025
(51) Int. Cl.: D06N 1/00, D04H 1/00, B32B 1/00, D06N 7/00

(54) **CARPET TILES WITH IMPROVED DIMENSIONAL STABILITY**

(30) Priority: 19.11.2024 US 202418951867
(71) Applicant: Johns Manville, Denver, CO 80202 (US)
(72) Inventor: GUO, Zhihua, Ottawa Hills, 43615 (US); SHAPE, Philip Christopher, Weddington, 28104 (US); RUI, Ferreira, Boulder, 80301 (US)
(74) Representative: Dörr, Klaus

(57) **Abstract**

A carpet tile includes a pile fabric layer, a primary backing, a latex precoat applied to the primary backing, a nonwoven mat positioned directly adjacent to the latex precoat, and a thermoplastic secondary backing applied to the nonwoven mat so that the thermoplastic secondary backing encapsulates a bottom surface of the nonwoven mat and saturates through the nonwoven mat to couple the nonwoven mat with the primary backing. The nonwoven mat includes a plurality of entangled fibers and a binder that bonds or adheres the entangled fibers together. At least some of the fibers of the nonwoven mat directly contact either the latex precoat or some of the yarns of the pile fabric layer.

## Description

### BACKGROUND OF THE INVENTION

Carpet tiles offer considerable advantages over rugs or wall to wall carpeting. For example, the use of carpet tiles for floor covering provides a simple installation process and allows removal of individual tiles which have become worn or soiled more than other tiles while those tiles which are not worn or soiled may be left in place. Additionally, tiles may be rearranged or replaced to enhance decorative effects. Conventional carpet tiles include a pile fabric facing set into a layer of resilient thermoplastic (including elastomeric) material which is stiffened with a layer of suitable stiffening fibers, such as fiberglass fibers. The tile is generally backed with another layer of resilient elastomeric or thermoplastic material to which an adhesive may be applied to set the carpet tile onto the floor.

Conventional carpet tiles are manufactured using a two-layer process. In some two-layer processes, the product has to be run though a production line twice. In the first pass, a nonwoven fiberglass mat is adhered to greige goods via an extruded thermoplastic secondary backing to form a greige good/extruded backing/fiberglass composite. The greige good/extruded backing/fiberglass composite is then wound onto an A-frame roller at the end of this process. In the second pass, the composite is again coated with the same or different secondary extruded backing and an optional felt layer (such as a polyester spunbond) may be added as the finished bottom side of the carpet tile. In other two-layer processes, the product is only run through the line once. In the first pass, a plastisol coating/secondary backing is applied to greige goods before a nonwoven fiberglass mat is adhered to form a greige good/extruded backing/fiberglass composite. The greige good/extruded backing/fiberglass composite is then coated again with the plastisol coating/secondary backing (with the coating going on the uncoated top side of the fiberglass) in a downstream step. This second layer of plastisol is designed to result in complete wet out of the fiberglass mat ensuring sufficient lamination strength and to act as the finished bottom side of the carpet tile. These two-part processes are both inefficient and expensive.

### BRIEF SUMMARY OF THE INVENTION

Embodiments of the present invention are directed to carpet tiles that exhibit enhanced dimensional stability in comparison with conventional carpet tiles. According to one aspect, a carpet tile includes a pile fabric layer having a plurality of yarns, a primary backing, and a latex precoat that is applied to the primary backing and pile fabric layer to couple the pile fabric layer with the primary backing. The carpet tile also includes a nonwoven mat that is positioned directly adjacent to the latex precoat. The nonwoven mat includes a plurality of entangled fibers and a binder that bonds or adheres the entangled fibers together. The carpet tile further includes a thermoplastic secondary backing that is applied to the nonwoven mat so that the thermoplastic secondary backing encapsulates a bottom surface of the nonwoven mat within the thermoplastic secondary backing and so that the thermoplastic secondary backing saturates through the nonwoven mat in order to couple the nonwoven mat with the primary backing. At least some of the fibers of the nonwoven mat directly contacts either the latex precoat or some of the yarns of the pile fabric layer.

In some instances, the binder that is applied to the nonwoven mat may be an emulsion binder. The nonwoven mat may have a basis weight of less than 1 Ib/sq and/or may have an air permeability of between 600 cfm/ft2 at 50 Pa and 2500 cfm/ft2 at 50 Pa. The nonwoven mat may have a thickness of between 6 mil and 22 mil. The nonwoven mat may exhibit a maximum dimensional change of 0.15% in both directions according to the Aachen test and an edge curl of less than 0.20 inches.

In some instances, the carpet tile additionally includes a second nonwoven mat that is positioned on a bottom surface of the thermoplastic secondary backing and a second thermoplastic secondary backing that is positioned on the bottom surface of the second nonwoven mat. The carpet tile may additionally include a felt layer that is positioned on a bottom surface of the thermoplastic secondary backing and/or a synthetic polymer fleece that is positioned on a bottom surface of the thermoplastic secondary backing.

According to another aspect, a method of forming a carpet tile includes providing a pile fabric layer that includes a plurality of yarns, a primary backing, and a latex precoat that is applied to the primary backing and plurality of yarns to couple the plurality of yarns with the primary backing. The method also includes positioning a nonwoven mat directly adjacent to the latex precoat, in which the nonwoven mat includes a plurality of entangled fibers and a binder that bonds or adheres the entangled fibers together. The method further includes applying a thermoplastic secondary backing to the nonwoven mat so that the thermoplastic secondary backing encapsulates a bottom surface of the nonwoven mat within the thermoplastic secondary backing and so that the thermoplastic secondary backing saturates the nonwoven mat to couple the nonwoven mat with the primary backing. At least some of the fibers of the nonwoven mat directly contact the latex precoat or some of the yarns of the pile fabric layer.

The binder that is applied to the nonwoven mat may be an emulsion binder. The nonwoven mat nay have a basis weight of less than 1 Ib/sq (50gsm) and/or has an air permeability of between 600 cfm/ft2 at 50 Pa and 2500 cfm/ft2 at 50 Pa. The nonwoven mat may have a thickness of between 6 mil and 22 mil and/or may exhibit a maximum dimensional change of 0.15% in both directions according to the Aachen test and an edge curl of less than 0.20 inches.

In some instances, the method additionally includes positioning a second nonwoven mat on a bottom surface of the thermoplastic secondary backing and applying a thermoplastic backing to the bottom surface of the second nonwoven mat. The method may additionally include positioning a felt layer that on a bottom surface of the thermoplastic secondary backing and/or positioning a synthetic polymer fleece on a bottom surface of the thermoplastic secondary backing.

According to another aspect, a carpet tile forming system includes a pile fabric delivery mechanism that includes one or more rollers that provide a pile fabric, in which the pile fabric has a plurality of yarns, a primary backing, and a latex precoat that is applied to the plurality of yarns and pile fabric layer to couple the plurality of yarns with the primary backing. The system also includes a reinforcement delivery mechanism that includes one or more rollers that provide a nonwoven mat directly adjacent to the pile fabric so that an inner surface of the nonwoven mat directly contacts the latex precoat of the pile fabric. The nonwoven mat includes a plurality of entangled fibers and a binder that bonds or adheres the entangled fibers together. The system further includes a secondary backing applicator that applies an extrudate to an outer surface of the nonwoven mat as the pile fabric and nonwoven mat are concurrently passed through the secondary backing applicator. The system additionally includes an extrudate press mechanism having one or more rollers, or other press means, that press the extrudate through the nonwoven mat so that the extrudate encapsulates the outer surface of the nonwoven mat and so that the extrudate saturates the nonwoven mat to couple the nonwoven mat with the primary backing of the pile fabric.

In some instances, the system additionally includes a cap layer mechanism that includes one or more rollers that apply a fleece or felt layer to an outer surface of the extrudate such that the carpet tile includes an outer fleece or felt layer positioned opposite the pile fabric. In some instances, the system may additionally include 1) a second reinforcement delivery mechanism that includes one or more rollers that provide a second nonwoven mat directly adjacent to an outer surface of the extrudate such that the extrudate is sandwiched between the nonwoven mat and the second nonwoven mat, 2) a second secondary backing applicator that applies a second extrudate to an outer surface of the second nonwoven mat, and 3) a second extrudate press mechanism that includes one or more rollers that press the second extrudate through the second nonwoven mat such that the second extrudate encapsulates the outer surface of the second nonwoven mat. In such instances, the system may additionally include a cap layer mechanism that includes one or more rollers that apply a fleece or felt layer to an outer surface of the second extrudate such that the carpet tile includes an outer fleece or felt layer positioned opposite the pile fabric.

According to another aspect, a reinforced pile fabric includes a plurality of yarns, a primary backing, a nonwoven mat that is positioned directly adjacent to the plurality of yarns and the primary backing, and a latex precoat that couples or adheres the plurality of yarns, the primary backing, and the nonwoven mat together. The nonwoven mat includes a plurality of entangled fibers and a binder that bonds or adheres the entangled fibers together. The latex precoat is saturated through the nonwoven mat to couple or adhere the plurality of yarns, the primary backing, and the nonwoven mat together. At least some of the fibers of the nonwoven mat directly contact at least some of the yarns and/or the primary backing.

In one instance, a majority of the latex precoat material is positioned on a bottom surface of the nonwoven mat that is opposite a top surface that directly contact at least some of the yarns and/or the primary backing. Alternatively, a majority of the latex precoat material may be positioned between the nonwoven mat and the yarns and primary backing. The nonwoven mat may have a basis weight of less than 1 Ib/sq and/or an air permeability of between 600 cfm/ft2 at 50 Pa and 2500 cfm/ft2 at 50 Pa. The nonwoven mat may have a thickness of between 6 mil and 22 mil. The binder that is applied to the nonwoven mat may be an emulsion binder. The reinforced pile fabric may be free of a thermoplastic secondary backing,

According to another aspect, a reinforced pile fabric forming system includes a Greige goods delivery mechanism that includes one or more rollers that provide Greige goods and a reinforcement delivery mechanism that includes one or more rollers that provide a nonwoven mat adjacent to the Greige goods. The Greige goods include a plurality of yarns and a primary backing and the nonwoven mat includes a plurality of entangled fibers and a binder that bonds or adheres the entangled fibers together. The system also includes a precoat applicator that applies a latex precoat to the Greige goods and nonwoven mat and a press mechanism that includes one or more rollers that press the Greige goods, the nonwoven mat, and the latex precoat so that the latex precoat saturates the nonwoven mat and a lower surface of the Greige goods. The system further includes an oven or heater that cures the latex precoat and thereby couples or adheres the Greige goods and nonwoven mat together. At least some of the fibers of the nonwoven mat directly contact the plurality of yarns and/or primary backing of the Greige goods.

In some instances, the precoat applicator is positioned so that the latex precoat is applied between the Greige goods and the nonwoven mat. Alternatively, the precoat applicator may be positioned so that the latex precoat is applied to a lower surface of the nonwoven mat that is opposite an upper surface that directly contacts the Greige goods.

According to another aspect, a method of forming a reinforced pile fabric includes providing Greige goods and positioning a nonwoven mat adjacent to the Greige goods. The Greige goods include a plurality of yarns and a primary backing and the nonwoven mat includes a plurality of entangled fibers and a binder that bonds or adheres the entangled fibers together. The method also includes applying a latex precoat to the Greige goods and nonwoven mat and pressing the Greige goods, the nonwoven mat, and the latex precoat so that the latex precoat saturates the nonwoven mat and a lower surface of the Greige goods. The method further includes curing the latex precoat to thereby couple or adhere the Greige goods and nonwoven mat together. At least some of the fibers of the nonwoven mat directly contact the plurality of yarns and/or primary backing of the Greige goods.

In some instances, the latex precoat is applied between the Greige goods and the nonwoven mat. Alternatively, the latex precoat may be applied to a lower surface of the nonwoven mat that is opposite an upper surface that directly contacts the Greige goods.

### BRIEF DESCRIPTION OF THE DRAWINGS

Various features, aspects, and advantages of the present invention will be better understood when the following detailed description is read with reference to the accompanying figures in which like characters represent like parts throughout the figures, wherein:
FIGs. 1-4 illustrate embodiments of carpet tiles.
FIG. 5 illustrates an embodiment of a nonwoven mat.
FIGs. 6-7 illustrates systems for producing the carpet tiles of FIGs. 1-4.
FIGs. 8-9 illustrates systems for producing Greige goods that include a nonwoven mat.
FIG. 10 illustrate an embodiment of a reinforced pile fabric.
FIG. 11 illustrates a method of forming a carpet tile.

### DETAILED DESCRIPTION OF THE INVENTION

The ensuing description provides exemplary embodiments only, and is not intended to limit the scope, applicability, or configuration of the disclosure. Rather, the ensuing description of the exemplary embodiments will provide those skilled in the art with an enabling description for implementing one or more exemplary embodiments. It being understood that various changes may be made in the function and arrangement of elements without departing from the spirit and scope of the invention as set forth in the appended claims.

Embodiments of the present invention provide carpet tiles that position a reinforcing mat/scrim directly adjacent to the pile fabric layer. In conventional carpet tiles, a secondary backing is applied directly to the pile fabric layer and the reinforcing mat/scrim is applied to the secondary backing. As such, the secondary backing is sandwiched between the pile fabric layer and the reinforcing mat/scrim. In contrast to these conventional carpet tiles, the reinforcing mat/scrim in the embodiments described herein directly contacts the pile fabric layer. Because the secondary backing is not sandwiched between the pile fabric layer and the reinforcing mat/scrim, fibers of the reinforcing mat/scrim directly contact the fabric yarns, primary backing, and/or adhesive of the pile fabric layer.

In contrast to conventional carpet tiles, the secondary backing of the carpet tiles contemplated herein is applied onto an exterior surface of the reinforcing mat/scrim. The secondary backing is pressed through the reinforcing mat/scrim so that it is able to contact the pile fabric layer to adhere or bond the pile fabric layer and reinforcing mat/scrim together. The secondary backing encapsulates the reinforcing mat/scrim, which facilitates in handing of the carpet tile since an installer is not exposed to the fibers of the reinforcing mat/scrim. Application of the secondary backing onto the exterior of the reinforcing mat/scrim may also enable less secondary backing material to be used and/or may reduce an overall thickness of the carpet tile.

The reinforcing mat/scrim imparts the required dimensional stability and creates a suitable finished floor facing surface. Dimensional stability, as understood in the art, is the ability of a carpet tile to lie flat and remain flat and square on a floor surface under conditions of normal use as described in U.S. Patent No. 4,010,302, the entire contents of which are hereby incorporated by reference. The industry standard Aachen DIN STD 54318 test is used to determine the dimensional stability. In conventional carpet tiles, fiberglass mats or scrims may be placed between resilient thermoplastic backing layers to impart dimensional stability in carpet tiles.

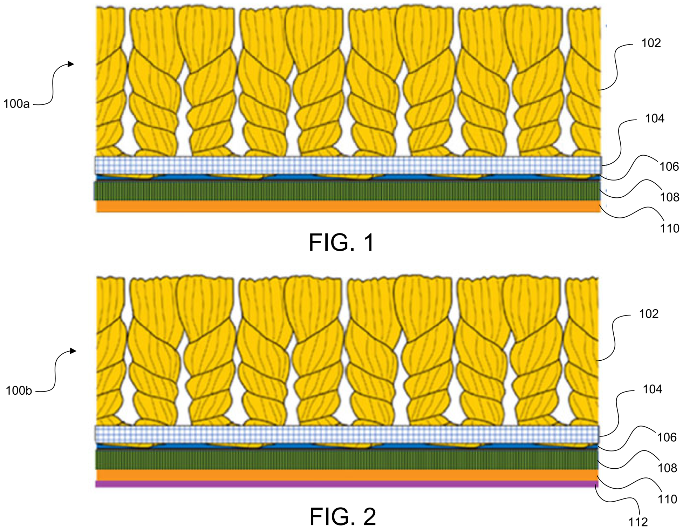

Turning now to the figures, FIG. 1 illustrates a cross section of a first embodiment of a carpet tile 100a. The carpet tile 100a may have essentially any shape and/or may be sized to match any desired application, although the carpet tile is commonly square-shaped. The carpet tile 100a includes a pile fabric layer or textile top layer 102 (hereinafter fabric layer 102) that functions as an exposed top surface of the carpet tile 100a. The fabric layer 102 includes a plurality of face yarns that may be formed from any fabric or other textile material to fit the needs or aesthetics of a particular application. The face yarn material is preferably nylon but other suitable synthetic yarns such as polyester, polypropylene, acrylic, wool, or blends thereof can be employed. The fabric layer 102 is tufted or secured to a primary backing layer 104, which is commonly made of nylon, polyester, fiberglass, and/or polypropylene. The primary backing layer 104 is preferably woven, but could be nonwoven depending on the application. The fabric layer 102 and primary backing layer 104 are sometimes referred to as "Greige goods".

A latex precoat 106, or other suitable adhesive, is applied to a bottom surface or end of the primary backing layer 104. The latex precoat 106 couples, bonds, or adheres the face yarns with the primary backing layer 104 to secure or maintain a position of the face yarns on or about the primary backing layer 104. The latex precoat 106 is preferably based on styrene butadiene, but other suitable materials such as urethane, PVC, acrylic, and the like, may be employed. The Greige goods - i.e., fabric layer 102 and primary backing layer 104 - and latex precoat 106 may be referred to as a carpet facer or primary carpet base. The process of forming the carpet facer or primary carpet base may be referred to as the "precoat process".

The carpet tile 100a also includes a nonwoven mat 108 that is positioned directly adjacent to the carpet facer. Specifically, the nonwoven mat 108 is positioned on a surface of the carpet facer that is opposite the exposed top surface of the carpet tile 100a. The nonwoven mat 108 includes a plurality of entangled fibers and a binder that bonds or adheres the entangled fibers together. As described herein, the nonwoven mat 108 commonly includes or consists of glass fibers, although in some embodiments the nonwoven mat 108 may include or consist of synthetic fibers (e.g., polyester spunbond) and/or a blend of glass and synthetic fibers. The synthetic/polymeric fibers can include or consist of acrylic, polyester, polypropylene, Aramids, Nylon, polyethylene, Rayon, Kynar^{®} PVDF, or any combination thereof. The binder that is applied to the nonwoven mat is commonly an emulsion binder.

The nonwoven mat 108 is typically positioned directly adjacent to the latex precoat 106 so that at least some of the fibers, and in some instances a majority of the fibers, directly contact the latex precoat 106. The fibers of the nonwoven mat 108 commonly also directly contact the primary backing 104 and/or the yarns of the fabric layer 102. The nonwoven mat 108 typically has a basis weight of less than 1 Ib/sq (50gsm) and exhibits an air permeability of between 600 cfm/ft2 at 50 Pa and 2500 cfm/ft2 at 50 Pa. More commonly, the nonwoven mat 108 exhibits an air permeability of between 700 cfm/ft2 at 50Pa and 1500 cfm/ft2 at 50Pa and most commonly between 1000 cfm/ft2 at 50Pa and 1500 cfm/ft2 at 50Pa. The nonwoven mat 108 also typically has a thickness of between 6 and 22 mil, more commonly between 8 and 18 mil, and preferably between 10 and 16 mil. The carpet tile 100a, which includes the nonwoven mat 108, exhibits a maximum dimensional change of 0.15% in both directions according to the Aachen test and an edge curl of less than 0.20 inches.

A thermoplastic secondary backing 110 is positioned on a bottom exterior surface of the nonwoven mat 108. The bottom exterior surface of the nonwoven mat 108 is the surface opposite to the surface that directly contacts the carpet facer. The thermoplastic secondary backing 110 is applied to the nonwoven mat 108 so that the thermoplastic secondary backing 110 encapsulates the bottom surface of the nonwoven mat 108 within the thermoplastic secondary backing 110. The thermoplastic secondary backing 110 saturates through the nonwoven mat 108 so that at least a portion of the thermoplastic secondary backing 110 contacts the carpet facer - i.e., the latex precoat 106, primary backing 104, and/or fabric layer 102. The thermoplastic secondary backing 110 that saturates through the nonwoven mat 108 couples, bonds, or adheres, the nonwoven mat 108 with the primary backing 104. Unlike conventional carpet tiles, however, the thermoplastic secondary backing 110 is not positioned between the primary backing 104 and the nonwoven mat 108 and as such, the nonwoven mat 108 is not separated from the primary backing 104 by the thermoplastic secondary backing 110. Stated differently, the thermoplastic secondary backing 110 is not sandwiched between the primary backing 104 and the nonwoven mat 108. Rather, a majority of the thermoplastic secondary backing 110 remains positioned below the nonwoven mat 108. In some instances, a ratio of the thermoplastic secondary backing 110 that is positioned below the nonwoven mat 108 to the thermoplastic secondary backing 110 that is positioned above the nonwoven mat 108 may be 9:1 or greater. Stated differently, the amount of thermoplastic secondary backing 110 that is positioned below the nonwoven mat 108 may be at least 9 times greater than the amount of thermoplastic secondary backing 110 that is positioned above the nonwoven mat 108.

The thermoplastic secondary backing 110 that is positioned below the nonwoven mat 108 fully encapsulates the nonwoven mat 108 so that the nonwoven mat 108 is completely covered by the thermoplastic secondary backing 110 and is not exposed to an exterior surface or environment. The thermoplastic secondary backing 110 is typically an adhesive layer with a thickness in the range of 0.01 to 0.070 inches. The thermoplastic secondary backing 110 may be formed from a thermoplastic elastomer and/or a plastisol material including or consisting of polyolefin, modified polyolefin, polyvinyl chloride (PVC), PVB (Polyvinyl butyral), polyurethane, asphalt, or other suitable thermoplastic materials. The thermoplastic secondary backing 110 may have a weight in the range of 10 - 90 oz/yd², and more commonly about 60 oz/yd². Because the nonwoven mat 108 is positioned directly adjacent to the carpet facer, it may provide a greater degree of reinforcement in comparison with conventional carpet tiles. The greater degree of reinforcement may enable less thermoplastic secondary backing 110 to be applied while achieving the same reinforcement properties, such as the Aachen values described herein.

The lower basis weight and increased air permeability of the nonwoven mat 108 ensures that a sufficient amount of the thermoplastic secondary backing 110 is able to penetrate through the nonwoven mat 108 to the primary backing 104 to bond, adhere, or couple the nonwoven mat 108 to the primary backing 104. If the amount of thermoplastic secondary backing 110 that penetrates through the nonwoven mat 108 is insufficient, the nonwoven mat 108 may delaminate or uncouple from the primary backing 104. A nonwoven mat 108 having a basis weight of less than 1 Ib/sq (50gsm) and an air permeability of greater than 600cfm/ft2 (@ 50 Pa is sufficient to ensure a necessary amount of thermoplastic secondary backing 110 penetrates through the nonwoven mat 108 to the primary backing 104.

As briefly described herein, the nonwoven mat 108 provides dimensional stability to the carpet tile 100a, which ensure that the carpet tile 100a does not exhibit any appreciable shrinkage and/or curling. The dimensional stability is improved with the nonwoven mat 108 being positioned directly adjacent to the carpet facer. The carpet tile 100a of FIG. 1 employs a single layer of the thermoplastic secondary backing 110, which reduces an overall thickness of the carpet tile 100a in comparison with many conventional carpet tiles, such as those that includes multiple secondary backing layers and/or a felt or fleece cap. Despite the reduced thickness, the carpet facer may be more robust than conventional carpet tile designs that employ a single secondary backing layer. This may be due to the increased dimensional stability that is provided by the nonwoven mat 108 being positioned directly adjacent to the carpet facer. For example, as briefly described herein, positioning the nonwoven mat 108 directly adjacent to the carpet facer may enable a reduced amount of thermoplastic secondary backing 110 to be used while maintaining the reinforcement properties (e.g., Aachen performance) of a conventional carpet tile.

FIG. 2 illustrates another embodiment of a carpet tile 100b. The carpet tile 100b of FIG. 2 is substantially similar to the carpet tile 100a of FIG. 1 except that the carpet tile 100b of FIG. 2 includes a cap layer 112 that is positioned on a bottom surface of the thermoplastic secondary backing 110. The cap layer 112 may be formed of felt and/or a synthetic polymer fleece material. The cap layer 112 may be positioned on the bottom surface of the thermoplastic secondary backing 110 to further cover any exposed fibers of the nonwoven mat 108, to facilitate in handling during installation of the carpet tile 100b, and/or to add an additional function such as providing cushion/comfort.

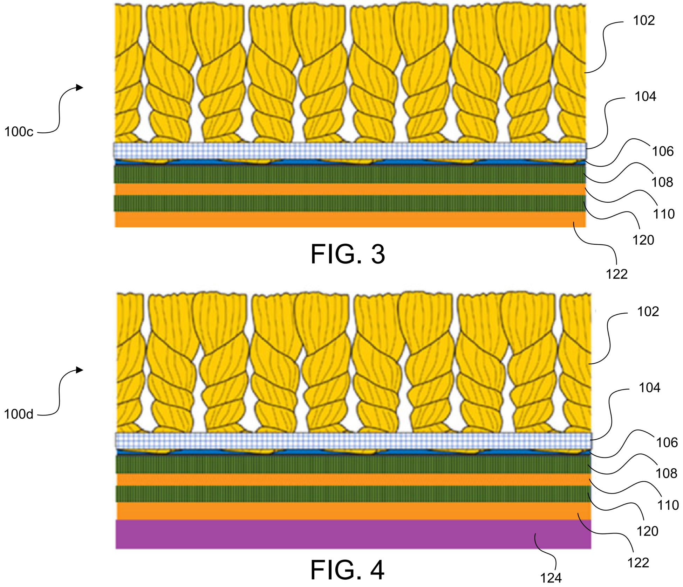

FIG. 3 illustrates another embodiment of a carpet tile 100c. The carpet tile 100c of FIG. 3 is substantially similar to the carpet tile 100a of FIG. 1 except that the carpet tile 100c of FIG. 3 includes a second nonwoven mat 120 that is positioned on a bottom surface of the thermoplastic secondary backing 110. The second nonwoven mat 120 may have a construction that is substantially similar to the construction of the nonwoven mat 108 or the construction of the two nonwoven mats may differ. For example, the two nonwoven mats may differ in fiber type (e.g., glass vs. synthetic fibers), mat thickness, fiber composition (e.g., homogenous glass mat vs hybrid glass and synthetic fiber mixture; one layer vs two layer mat construction), air permeability, basis weight, and the like. Each mat, however, typically is identical in shape and size so that each mat entirely spans an area of the carpet facer.

A second thermoplastic secondary backing 122 is positioned on the bottom surface of the second nonwoven mat 120. The second thermoplastic secondary backing 122 may have a chemistry that is substantially similar to the chemistry of the thermoplastic secondary backing 110 or the two chemistries may differ. For example, one chemistry may be a thermoplastic elastomer while the other is a plastisol material or one chemistry may be homogenous while the other is a blend of two or more materials. The weight and/or thickness of the two thermoplastic secondary backing layers may also differ. Each secondary backing layer, however, typically spans an entire area of the carpet facer and underlying nonwoven mat.

FIG. 4 illustrates another embodiment of a carpet tile 100d. The carpet tile 100d of FIG. 4 is substantially similar to the carpet tile 100c of FIG. 3 except that the carpet tile 100d of FIG. 4 includes a cap layer 124 that is positioned on a bottom surface of the second thermoplastic secondary backing 122. The cap layer 124 may be formed of felt and/or a synthetic polymer fleece material. The cap layer 124 may be positioned on the bottom surface of the second thermoplastic secondary backing 122 to facilitate in handling during installation of the carpet tile 100d.

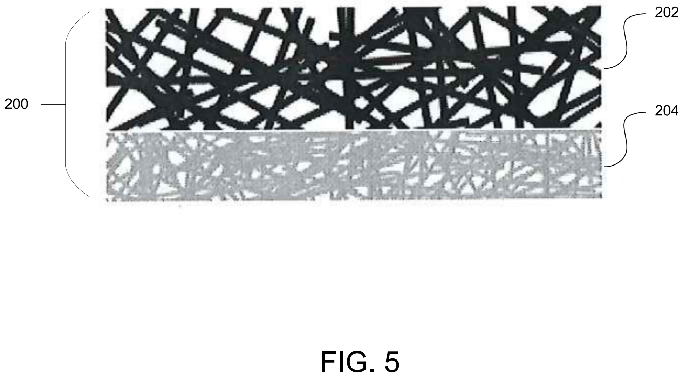

FIG. 5 illustrates an embodiment of a nonwoven mat 200. The nonwoven mat 200 may be a single layer mat or a dual layer mat that includes a first fiber layer 202 and a second fiber layer 204. As briefly described herein, the nonwoven mat 200 may be formed of glass fibers and/or synthetic fibers. In some embodiments, the first fiber layer 202 may be formed of predominantly glass fibers while the second fiber layer 204 is formed predominantly of synthetic fibers. The synthetic fibers may provide a soft, non-itchy bottom surface that may aid in handling of the carpet tile.

In some embodiments, the glass fibers may have diameters of between 8 and 25 µm, between 8 and 16 µm, and more commonly between 11 and 16 µm. The glass fibers may include a mixture of coarse fibers having an average diameter between 8 and 11 µm mixed with a second type of coarse fibers having a diameter between 12 and 25 µm. The coarse fibers may have lengths of between about ¼ inch and 2 inches. The nonwoven mat 200 and/or first layer 202 may include 60-95% glass fibers and 5-40% of a binder. In such instances, the second layer 204 may include 60-95% synthetic fibers and 5-40% of a binder.

The binder may be an acrylic type binder, such as Dow QRXP-1692 or BASF Acrodur 950L. In the dual layer construction, the first layer 202 may have a thickness of between about 0.1 mm and 1.5 mm, while the second layer 204 has a thickness of between about 0.1 mm and 4 mm such that the nonwoven mat 200 has a total thickness of between about 0.2 mm and 5.5 mm.

In some embodiments, the nonwoven mat 200 and/or first layer 202 may include a homogenous blend of differently sized glass fibers, such as a combination of coarse sized fibers and microfibers. The coarse sized fibers may have a fiber diameter in the range between about 8 and about 25 µm while the microfibers have a fiber diameter in the range between about 0.5 and 6 µm. In a more specific embodiment, the coarse sized fibers may have a fiber diameter in the range between about 8 and about 16 µm while the microfibers have a fiber diameter in the range between about 1 and 3 µm. In a specific embodiment, the coarse sized fibers may have a fiber diameter of about 13 µm while the microfibers have a fiber diameter of about 3 µm. The binder may be water repellant and/or include a water repellant additive such as a stearylated melamine water repellant. The coarse sized fibers may be made from E glass, C glass, T glass, sodium borosilicate glass, A & S glasses, Basalt, mineral wool, slag fiber, and mixtures thereof.

In some embodiments, the synthetic fibers may have a fiber diameter between 0.3 and 8 denier. A percentage by weight of the glass fibers in the nonwoven mat 200 and/or one of the layers (e.g., the first layer 202 or second layer 204) may be between 70 and 99 percent, while the percentage by weight of synthetic fibers may be between 1 and 30 percent. In the dual layer construction, the first layer 202 and the second layer 204 typically both include glass and synthetic fibers, but the amount of each fiber in the two layers differs. The glass and synthetic fibers are typically homogeneously dispersed in the layers. A single binder is often employed to bond the first layer 202 and the second layer 204 together. The single binder may function to both bind the fibers together in the respective layers and bond the respective layers together. The binder is typically homogenously or relatively evenly dispersed or distributed throughout the nonwoven mat 200. Since the binder is relatively evenly distributed through the nonwoven mat 200, the nonwoven mat 200 does not include a separate binder, or a layer of binder (or other adhesive), at an interface between the first layer 202 and the second layer 204. Stated differently, there is not a concentration of a binder at an interface or boundary between the first and second layers 202, 204 since the binder is evenly distributed through the nonwoven mat 200.

In some embodiments, the thickness of the first layer 202 may be greater than the thickness of the second layer 204. In addition or alternatively, the porosity of the first layer 202 may be greater than the second layer 204. The more porous first layer 202 may enable the first layer 202 to absorb or retain a portion of the secondary backing, which may aid in adhering or bonding the nonwoven mat 200 to the carpet facer.

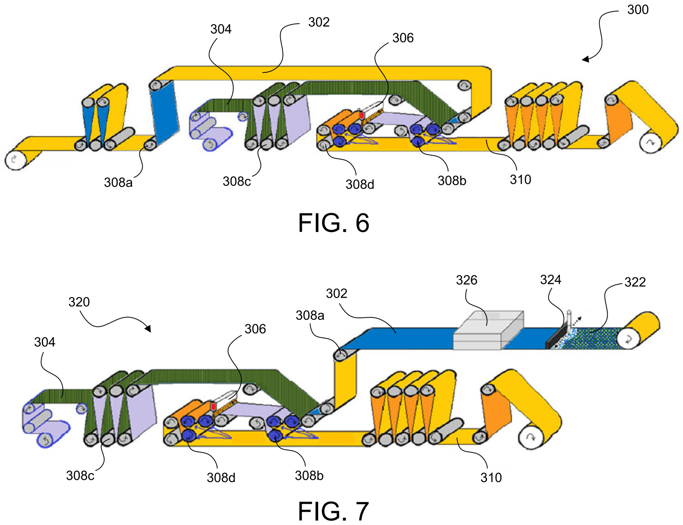

FIG. 6 illustrates a system 300 for manufacturing or forming a carpet tile as described herein. System 300 includes a pile fabric delivery mechanism that includes one or more rollers (e.g., 308a) that provide, deliver, or route a pile fabric 302 along the system 300. The pile fabric 302 is a carpet facer that includes a plurality of yarns, a primary backing, and a latex precoat that is applied to the plurality of yarns and pile fabric layer to couple the plurality of yarns with the primary backing. The pile fabric 302 is formed in a precoat process and is supplied, such as by rolling the pile fabric 302 on a roll and unwinding the pile fabric 302 therefrom. The pile fabric 302 is passed through one or more roller assemblies (e.g., see roller 308a) toward a secondary backing applicator or extruder 306 (hereinafter extruder 306). The extruder 306 extrudes or otherwise applies an extrudate, such as a thermoplastic or plastisol material, that serves as a secondary backing 110 of the carpet tile.

The system 300 also includes a reinforcement delivery mechanism that includes one or more rollers (e.g., 308c) that provide, deliver, or route a nonwoven mat 304 along the system 300. The nonwoven mat is provided via a nonwoven mat source, such as a roller about which the nonwoven mat 304 is wound. The nonwoven mat 304 is delivered or routed through the system, via one or more roller assemblies (e.g., see roller 308c), so that the nonwoven mat 304 is positioned directly adjacent to the pile fabric 302. The system 300 is constructed or designed so that an inner surface of the nonwoven mat 304 directly contacts an inner surface (e.g., the latex precoat) of the pile fabric 302. As described herein, the nonwoven mat 304 includes a plurality of entangled fibers and a binder that bonds or adheres the entangled fibers together. The system 300 is constructed or designed so that the pile fabric 302 and nonwoven mat 304 directly contact one another prior to application of the extrudate that serves as a secondary backing 110 of the carpet tile.

The pile fabric 302 and nonwoven mat 304 are routed or directed together toward the extruder 306 via one or more one or more roller assemblies (e.g., see roller 308b). In some embodiments, one or more of the roller assemblies that route the pile fabric 302 and nonwoven mat 304 together may be chilled rollers, or rollers that are cooled in comparison with an ambient temperature. The extruder 306 applies an extrudate (e.g., thermoplastic or plastisol material) to an outer surface of the nonwoven mat 304 as the pile fabric 302 and nonwoven mat 304 are concurrently passed through, under, or passed the extruder 306.

The system further includes an extrudate press mechanism that includes one or more rollers (e.g., roller 308d) that press the extrudate through the nonwoven mat 304 so that the extrudate encapsulates the outer surface of the nonwoven mat 304. The extrudate is also pressed through the nonwoven mat 304 to saturate the nonwoven mat 304 and contact the primary backing of the pile fabric 302 in order to couple the nonwoven mat 304 with the primary backing of the pile fabric 302. In some embodiments, one or more rollers of the extrudate press mechanism (e.g., see roller 308d) may be a nip chill roller assembly that may press the nonwoven mat 304 and pile fabric 302 together and cause extrudate (e.g., thermoplastic) to bond the nonwoven mat 304 and pile fabric 302 together due to the lower temperature of the chill rollers. In other embodiments, the nonwoven mat 304 and pile fabric 302 may pass through a set of heated ovens (not shown) to cure the extrudate (e.g., plastisol) and bond the nonwoven mat 304 and pile fabric 302 together. Given that the nonwoven mat 304 and pile fabric 302 directly contact each other prior to application of the extrudate, the nonwoven mat 304 is not laminated to the pile fabric 302 using a conventional process.

Once cooled/cured, the carpet 310, which includes the nonwoven mat 304 and pile fabric 302, may be routed via one or more roller assemblies toward a carpet tile roll mechanism to form a roll and/or sheet of carpet 310 or toward a cutting apparatus (not shown), which cuts the carpet 310 into individual carpet tiles. In some embodiments, prior to or after cutting the tiles an adhesive layer, such as a pressure sensitive adhesive layer, may be applied to the exposed bottom surface of the carpet tiles, oftentimes along with a non-stick release liner.

FIG. 7 illustrates another system 320 for manufacturing or forming a carpet tile as described herein. The system 320 of FIG. 7 is substantially similar to the system 300 of FIG. 6 and for purposes of brevity, a description of the same, or similar, mechanisms has been omitted from the description of FIG. 7. The description of the various mechanisms in FIG. 6, however, is equally applicable to the description of FIG. 7. The system 320 of FIG. 7 differs mainly due to the inclusion of the precoat process that forms the pile fabric 302. Specifically, Greige goods 322 are supplied via a Greige goods source, such as from a roller about which the Greige goods are wound. As described herein, the Greige goods 322 include face yarns that are tufted about a primary backing. The Greige goods 322 are routed or delivered to an extruder or applicator 324 that applies the precoat adhesive that bonds or adheres the face yarns to the primary backing. The Greige goods 322 and applied precoat adhesive are routed through an oven or heating source 326 to cure the adhesive and thereby form the pile fabric 302. The system 320 routes or directs the pile fabric 302 so that the nonwoven mat 304 is applied directly to the pile fabric 302 and the extrudate is applied via the extruder 306 as previously described.

In some embodiments, the system 300, 320 of FIGs. 6 and/or 7 also includes a cap layer mechanism (not shown). In such embodiments, the cap layer mechanism may include one or more rollers that apply a fleece or felt layer to an outer surface of the extrudate so that the carpet tile includes an outer fleece or felt layer positioned opposite the pile fabric as illustrated in FIG. 2. The cap layer mechanism would be positioned after or downstream of the extruder 306.

The system 300, 320 of FIGs. 6 and/or 7 may alternatively include a second reinforcement delivery mechanism (not shown). The second reinforcement delivery mechanism would be positioned after or downstream of the extruder 306. In such embodiments, the second reinforcement delivery mechanism would include one or more rollers that provide a second nonwoven mat (not shown) directly adjacent to an outer surface of the extrudate that is applied via the extruder 306. The extrudate that is applied via the extruder 306 would be sandwiched between the nonwoven mat 304 and the second nonwoven mat. The system would also typically include a second secondary backing applicator or extruder (not shown) that applies a second extrudate (not shown) to an outer surface of the second nonwoven mat so that the carpet tile includes the second extrudate on an outer surface of the carpet tile opposite the pile fabric as illustrated in FIG. 3. The system would further include a second extrudate press mechanism
(not shown) that includes one or more rollers that press the second extrudate through the second nonwoven mat so that the second extrudate encapsulates the outer surface of the second nonwoven mat. In some embodiments, the system may additionally include a cap layer mechanism (not shown) that applies a fleece or felt layer to an outer surface of the second extrudate so that the carpet tile includes an outer fleece or felt layer positioned opposite the pile fabric as illustrated in FIG. 4. The cap layer mechanism may include one or more rollers that route or direct the fleece or felt layer toward the outer surface of the second extrudate.

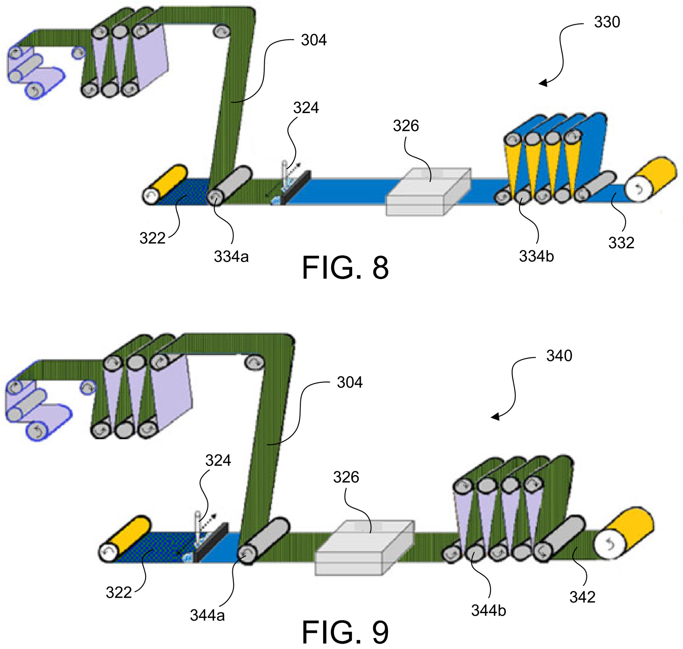

FIG. 8 illustrates a system 330 for manufacturing or forming a reinforced pile fabric product. Specifically, the system 330 of FIG. 8 illustrates the nonwoven mat 304 being adhered or coupled with the Greige goods 322 independent of the application of the extrudate. Stated differently, the extrudate is not applied, or may not be applied, during the process illustrated in FIG. 8. Rather, the nonwoven mat 304 is coupled or adhered to the Greige goods 322 via the precoat adhesive.

The Greige goods 322 are supplied via a Greige goods source, such as from a roller about which the Greige goods are wound. As described herein, the Greige goods 322 include face yarns that are tufted about a primary backing. The Greige goods 322 are routed or delivered toward an extruder or applicator 324. The nonwoven mat 304 is supplied via a nonwoven mat source, such as from a roller about which the nonwoven mat is wound. The nonwoven mat 304 is positioned atop the Greige goods 322 so that the nonwoven mat 304 directly contacts the yarns and/or primary backing of the Greige goods 322 as described herein. The Greige goods 322 and nonwoven mat 304 may pass through a roller 334a or other mechanism that compresses or squeezes the two layers together. The Greige goods 322 and nonwoven mat 304 are then passed through the extruder or applicator 324, which applies the precoat adhesive to bond or adhere the face yarns, primary backing, and nonwoven mat 304 together. The applied precoat adhesive (e.g., latex precoat) typically saturates the nonwoven mat 304 and a lower surface of the Greige goods 322. In some instances, the applied precoat adhesive may be pressed through the nonwoven mat 304 to saturate the nonwoven mat 304 and the lower surface of the Greige goods 322. The Greige goods 322, nonwoven mat 304, and applied precoat adhesive are routed through an oven or heating source 326 to cure the adhesive and thereby form the reinforced pile fabric 332 by coupling or adhering the Greige goods 322 and nonwoven mat 304 together. At least some of the fibers of the nonwoven mat 304 directly contact the yarns and/or primary backing of the Greige goods 322. The reinforced pile fabric 332 may be routed through one or more roller 334b before being wound onto a roller. The reinforced pile fabric 332 may then be used in a separate system that applies the extrudate and/or one or more other layers, such as an additional nonwoven mat and/or cap layer to form a carpet tile.

FIG. 9 illustrates another system 340 for manufacturing or forming a reinforced pile fabric product. Similar to the system 330 of FIG. 8, the system 340 of FIG. 9 illustrates the nonwoven mat 304 being adhered or coupled with the Greige goods 322 independent of the application of the extrudate. The system 340 of FIG. 9 couples or adheres the nonwoven mat 304 to the Greige goods 322 via the precoat adhesive. The system 340 of FIG. 9 differs in that the precoat adhesive is applied prior to the application of the nonwoven mat 304. Specifically, the Greige goods 322 are supplied via a Greige goods source, such as from a roller about which the Greige goods are wound. The Greige goods 322 are routed, delivered, or passed through the extruder or applicator 324, which applies the precoat adhesive. The nonwoven mat 304 is supplied via a nonwoven mat source, such as from a roller about which the nonwoven mat is wound. The nonwoven mat 304 is positioned atop the Greige goods 322 so that the nonwoven mat 304 directly contacts the precoat adhesive and/or the yarns and/or primary backing of the Greige goods 322 as described herein. The Greige goods 322, precoat adhesive, and nonwoven mat 304 are then passed through a roller 344a or other press mechanism that compresses or squeezes the Greige goods, precoat adhesive, and nonwoven mat 304 together. The press mechanism ensures that the precoat adhesive saturates the nonwoven mat 304 and a lower surface of the Greige goods 322. The Greige goods 322, nonwoven mat 304, and applied precoat adhesive are routed through an oven or heating source 326 to cure the adhesive and thereby form the reinforced pile fabric 342 by coupling or adhering the Greige goods 322 and nonwoven mat 304 together. At least some of the fibers of the nonwoven mat 304 directly contact the yarns and/or primary backing of the Greige goods 322. The reinforced pile fabric 342 may be routed through one or more roller 344b before being wound onto a roller. The reinforced pile fabric 342 may then be used in a separate system that applies the extrudate and/or one or more other layers, such as an additional nonwoven mat and/or cap layer to form a carpet tile.

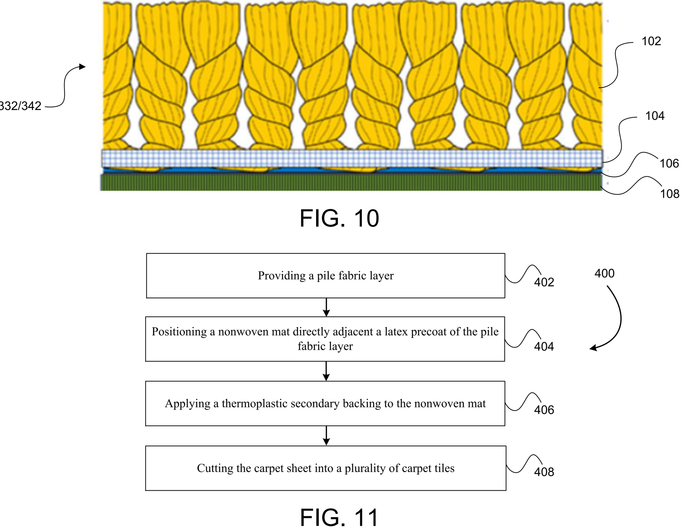

FIG. 10 illustrates a reinforced pile fabric 332/342 that may be formed using the systems of FIGs. 8-9, or any other system. As described herein, the pile fabric includes or consists of a plurality of yarns or fabric layer 102 (hereinafter 102), a primary backing 104, and a latex precoat 106. Unlike the previously described pile fabrics, however, the reinforced pile fabric 332/342 also includes a nonwoven mat 108 that is positioned directly adjacent to the fabric layer 102 and the primary backing 104. The fabric layer 102 functions as an exposed top surface of the reinforced pile fabric 332/342. The nonwoven mat 108 reinforces the pile fabric. The reinforced pile fabric 332/342 differs from the carpet tiles previously described in that the reinforced pile fabric 332/342 does not include, or stated differently is free of, a thermoplastic secondary backing. Rather, the nonwoven mat 108 is typically the lower layer or material of the reinforced pile fabric 332/342, although in some instances an additional layer or material may be positioned on a bottom or lower surface of the nonwoven mat 108 to aid in handling of the reinforced pile fabric 332/342.

The reinforced pile fabric 332/342 is designed to be used in a subsequent process, such as in the systems of FIGs. 6-7 to form a carpet tile. In such instances, the reinforcement delivery mechanism may be omitted since the nonwoven mat is pre-installed or included in the reinforced pile fabric 332/342. As such, the extrudate and/or any additional layers may be added to form the carpet tile.

The nonwoven mat 108 includes a plurality of entangled fibers and a binder that bonds or adheres the entangled fibers together. The latex precoat 106 is applied to the plurality of yarns, the primary backing 104, and the nonwoven mat 108 to couple or adhere these materials together. The latex precoat 106 is saturated through the nonwoven mat 108 and at least a lower surface or portion of the plurality of yarns and primary backing 104 to couple or adhere the plurality of yarns, the primary backing 104, and the nonwoven mat 108 together. At least some of the fibers of the nonwoven mat 108 directly contact at least some of the yarns and/or the primary backing 104 of the reinforced pile fabric 332/342.

In some instances, a majority of the latex precoat 106 is positioned on a bottom or lower surface of the nonwoven mat 108. The bottom or lower surface of the nonwoven mat 108 is positioned opposite to a top or upper surface of the nonwoven mat 108 that directly contact at least some of the yarns and/or the primary backing 104. The latex precoat 106 may be positioned on the bottom or lower surface of the nonwoven mat 108 when the system 330 of FIG. 8 is used to form the reinforced pile fabric 332. In other instances, a majority of the latex precoat 106 is positioned between the nonwoven mat 108 and the yarns and primary backing 104. The latex precoat 106 may be positioned between the nonwoven mat 108 and the yarns and primary backing 104 when the system 340 of FIG. 9 is used to form the reinforced pile fabric 342.

The nonwoven mat 108 may have any of the properties described herein. For example, the nonwoven mat may have a basis weight of less than 1 Ib/sq and an air permeability of between 600 cfm/ft2 at 50 Pa and 2500 cfm/ft2 at 50 Pa. The nonwoven mat may have a thickness of between 6 mil and 22 mil. The binder that is applied to the nonwoven mat may be an emulsion binder.

FIG. 11 illustrates a method 400 of forming a carpet tile. At block 402, a pile fabric layer is provided. The pile fabric layer includes a plurality of yarns, a primary backing, and a latex precoat that is applied to the primary backing and the plurality of yarns to couple the plurality of yarns with the primary backing as described herein. At block 404, a nonwoven mat is positioned directly adjacent to the latex precoat of the pile fabric layer. The nonwoven mat includes a plurality of entangled fibers and a binder that bonds or adheres the entangled fibers together as described herein. At least some of the fibers of the nonwoven mat directly contact the latex precoat and/or some of the yarns of the pile fabric layer. At block 406, a thermoplastic secondary backing is applied to the nonwoven mat so that the thermoplastic secondary backing encapsulates a bottom surface of the nonwoven mat within the thermoplastic secondary backing and so that the thermoplastic secondary backing saturates the nonwoven mat to couple the nonwoven mat with the primary backing.

The binder that is applied to the nonwoven mat may be an emulsion binder. The nonwoven mat may have a basis weight of less than 1 Ib/sq (50 grams per square meter (gsm)) and has an air permeability of between 600 cfm/ft2 at 50 Pa and 2500 cfm/ft2 at 50 Pa. More commonly, the nonwoven mat exhibits an air permeability of greater than 700 cfm/ft2 at 50Pa and most commonly greater than 1000 cfm/ft2 at 50Pa. In some instances, an upper limit of the nonwoven mat's air permeability may be 1500 cfm/ft2 at 50Pa. The nonwoven mat may have a thickness of between 6 and 22 mil, more commonly between 8 and 18 mil, and preferably between 10 and 16 mil. The nonwoven mat may exhibit a maximum dimensional change of 0.15% in both directions according to the Aachen test and an edge curl of less than 0.20 inches.

In some embodiments, the method may also include positioning a second nonwoven mat on a bottom surface of the thermoplastic secondary backing and applying a thermoplastic backing to the bottom surface of the second nonwoven mat. Alternatively or additionally, the method may include positioning a felt layer or a synthetic polymer fleece on a bottom surface of the thermoplastic secondary backing. The method may further include cutting the carpet sheet into a plurality of carpet tiles as illustrated at block 408.

In some embodiments, the method of FIG. 11 may represent a method of forming a reinforced pile fabric. In such instances, the method includes providing Greige goods having a plurality of yarns and a primary backing. The method also includes positioning a nonwoven mat adjacent to the Greige goods, in which the nonwoven mat includes a plurality of entangled fibers and a binder that bonds or adheres the entangled fibers together. The method further includes applying a latex precoat to the Greige goods and nonwoven mat and pressing the Greige goods, the nonwoven mat, and the latex precoat so that the latex precoat saturates the nonwoven mat and a lower surface of the Greige goods. The method additionally includes curing the latex precoat to thereby couple or adhere the Greige goods and nonwoven mat together. At least some of the fibers of the nonwoven mat directly contact the plurality of yarns and/or primary backing of the Greige goods.

In one embodiment, the latex precoat is applied between the Greige goods and the nonwoven mat. In another embodiment, the latex precoat is applied to a lower surface of the nonwoven mat that is opposite an upper surface that directly contacts the Greige goods.

A carpet tile as described herein was formed and compared with a similar carpet tile formed according to a conventional process. Specifically, the same nylon based Greige goods was used - i.e., approximately 23.9 oz/yd², 10 gauge and 12 stiches per inch. 143 grams/9 oz cup of latex precoat was used to each of the Greige goods. Polyethylene compound was used for the secondary backing of each carpet tile. Evalith^{®} FF 25/3 supplied by Johns Manville was used as the reinforcement nonwoven mat. Each carpet tile had a nominal basis weight of 25 gsm and 25% of LOI (loss on ignition) from a modified acrylic binder. The air permeability of each reinforcement nonwoven mat was 1144 +/- 33 cfm/ft² at 50 Pa pressure difference.

The key difference in the carpet tiles was the position of the reinforcement nonwoven mat. Specifically, the polyethylene compound was sandwiched between the Greige goods and reinforcement nonwoven mat in the control sample while the reinforcement nonwoven mat was positioned directly adjacent to the Greige good in the test sample as described herein. The polyethylene compound was applied to a lower surface of the reinforcement nonwoven mat in the test sample. Other process settings and conditions were maintained the same for the control and test samples.

Table 1 below shows the Aachen test results of the control and test samples. Edge curl represents the dimensional stability on the "z" direction. Both edge curl and machine direction Aachen were significantly better (48% reduced dimensional change for the machine direction) for the test sample in comparison with the control sample. In both cases, percentage changes on the cross-machine direction are relatively smaller than the machine direction. All numbers are well within industry targets (-0.2 to 0.2%). Changing the feeding position of the reinforcement mat so it ends up being closer to the primary backing/precoat in the test sample provides more reinforcement to the carpet facer, which results in better dimensional stability (Aachen data) for the carpet tile. In some instances, the weight of secondary backing (a major cost contributor) can be significantly reduced to achieve the same Aachen performance as the control sample. Additionally, a cap layer is typically not needed when a glass mat is used as the reinforcement mat, which provides another significant cost reduction opportunity.

**Table 1: Aachen test results of control sample and test sample**

| | | Aachen | |
|---|---|---|---|
| Sample | Edge curl (inch) | Percentage change on machine direction | Percentage change on cross machine direction |
| Test | 0.17 | -0.082 | -0.069 |
| Test repeat | 0.15 | -0.079 | 0.019 |
| Control | 0.30 | -0.168 | -0.019 |
| Control repeat | 0.20 | -0.141 | -0.046 |

While several embodiments and arrangements of various components are described herein, it should be understood that the various components and/or combination of components described in the various embodiments may be modified, rearranged, changed, adjusted, and the like. For example, the arrangement of components in any of the described embodiments may be adjusted or rearranged and/or the various described components may be employed in any of the embodiments in which they are not currently described or employed. As such, it should be realized that the various embodiments are not limited to the specific arrangement and/or component structures described herein.

In addition, it is to be understood that any workable combination of the features and elements disclosed herein is also considered to be disclosed. Additionally, any time a feature is not discussed with regard in an embodiment in this disclosure, a person of skill in the art is hereby put on notice that some embodiments of the invention may implicitly and specifically exclude such features, thereby providing support for negative claim limitations.

Having described several embodiments, it will be recognized by those of skill in the art that various modifications, alternative constructions, and equivalents may be used without departing from the spirit of the invention. Additionally, a number of well-known processes and elements have not been described in order to avoid unnecessarily obscuring the present invention. Accordingly, the above description should not be taken as limiting the scope of the invention.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A carpet tile, comprising:
a pile fabric layer that includes a plurality of yarns;
a primary backing;
a latex precoat applied to the primary backing and pile fabric layer to couple the pile fabric layer with the primary backing;
a nonwoven mat that is positioned directly adjacent to the latex precoat, the nonwoven mat including a plurality of entangled fibers and a binder that bonds or adheres the entangled fibers together; and
a thermoplastic secondary backing applied to the nonwoven mat so that the thermoplastic secondary backing encapsulates a bottom surface of the nonwoven mat within the thermoplastic secondary backing and so that the thermoplastic secondary backing saturates through the nonwoven mat in order to couple the nonwoven mat with the primary backing;
wherein at least some of the fibers of the nonwoven mat directly contact either the latex precoat or some of the yarns of the pile fabric layer.

2. The carpet tile as claimed in claim 1, wherein the binder applied to the nonwoven mat is an emulsion binder.

3. The carpet tile as claimed in claim 1 or 2, wherein the nonwoven mat has a basis weight of less than 1 Ib/sq and has an air permeability of between 600 cfm/ft2 at 50 Pa and 2500 cfm/ft2 at 50 Pa.

4. The carpet tile as claimed in one or more of claims 1 to 3, wherein the nonwoven mat has a thickness of between 6 mil and 22 mil.

5. The carpet tile as claimed in one or more of claims 1 to 4, wherein the nonwoven mat exhibits a maximum dimensional change of 0.15% in both directions according to the Aachen test and an edge curl of less than 0.20 inches.

6. The carpet tile as claimed in one or more of claims 1 to 5, wherein the carpet tile further comprises a second nonwoven mat that is positioned on a bottom surface of the thermoplastic secondary backing and a second thermoplastic secondary backing that is positioned on the bottom surface of the second nonwoven mat.

7. The carpet tile as claimed in one or more of claims 1 to 6, wherein the carpet tile further comprises a felt layer that is positioned on a bottom surface of the thermoplastic secondary backing.

8. The carpet tile as claimed in one or more of claims 1 to 7, wherein the carpet tile further comprises a synthetic polymer fleece that is positioned on a bottom surface of the thermoplastic secondary backing.

9. A method of forming a carpet tile comprising:
providing a pile fabric layer that includes:
a plurality of yarns;
a primary backing; and
a latex precoat applied to the primary backing and plurality of yarns to couple the plurality of yarns with the primary backing;
positioning a nonwoven mat directly adjacent to the latex precoat, the nonwoven mat including a plurality of entangled fibers and a binder that bonds or adheres the entangled fibers together; and
applying a thermoplastic secondary backing to the nonwoven mat so that the thermoplastic secondary backing encapsulates a bottom surface of the nonwoven mat within the thermoplastic secondary backing and so that the thermoplastic secondary backing saturates the nonwoven mat to couple the nonwoven mat with the primary backing;
wherein at least some of the fibers of the nonwoven mat directly contact the latex precoat or some of the yarns of the pile fabric layer.

10. The method as claimed in claim 9, wherein the binder applied to the nonwoven mat is an emulsion binder.

11. The method as claimed in claim 9 or 10, wherein the nonwoven mat has a basis weight of less than 1 Ib/sq (50gsm) and has an air permeability of between 600 cfm/ft2 at 50 Pa and 2500 cfm/ft2 at 50 Pa.

12. The method as claimed in one or more of claims 9 to 11, wherein the nonwoven mat has a thickness of between 6 mil and 22 mil.

13. The method as claimed in one or more of claims 9 to 12, wherein the nonwoven mat exhibits a maximum dimensional change of 0.15% in both directions according to the Aachen test and an edge curl of less than 0.20 inches.

14. The method as claimed in one or more of claims 9 to 13, wherein the method further comprises positioning a second nonwoven mat on a bottom surface of the thermoplastic secondary backing and applying a thermoplastic backing to the bottom surface of the second nonwoven mat.

15. The method as claimed in one or more of claims 9 to 14, wherein the method further comprises positioning a felt layer that on a bottom surface of the thermoplastic secondary backing.

16. The method as claimed in one or more of claims 9 to 15, wherein the method further comprises positioning a synthetic polymer fleece on a bottom surface of the thermoplastic secondary backing.

17. A carpet tile forming system comprising:
a pile fabric delivery mechanism comprising one or more rollers that provide a pile fabric, the pile fabric including:
a plurality of yarns;
a primary backing; and
a latex precoat applied to the plurality of yarns and pile fabric layer to couple the plurality of yarns with the primary backing;
a reinforcement delivery mechanism comprising one or more rollers that provide a nonwoven mat directly adjacent to the pile fabric so that an inner surface of the nonwoven mat directly contacts the latex precoat of the pile fabric, the nonwoven mat including:
a plurality of entangled fibers; and
a binder that bonds or adheres the entangled fibers together;
a secondary backing applicator that applies an extrudate to an outer surface of the nonwoven mat as the pile fabric and nonwoven mat are concurrently passed through the secondary backing applicator; and
an extrudate press mechanism comprising one or more rollers that press the extrudate through the nonwoven mat so that the extrudate encapsulates the outer surface of the nonwoven mat and so that the extrudate saturates the nonwoven mat to couple the nonwoven mat with the primary backing of the pile fabric.

18. The carpet tile forming system as claimed in claim 17, the system further comprising a cap layer mechanism comprising one or more rollers that apply a fleece or felt layer to an outer surface of the extrudate such that the carpet tile includes an outer fleece or felt layer positioned opposite the pile fabric.

19. The carpet tile forming system as claimed in claim 17 or 18, the system further comprising:
a second reinforcement delivery mechanism comprising one or more rollers that provide a second nonwoven mat directly adjacent to an outer surface of the extrudate such that the extrudate is sandwiched between the nonwoven mat and the second nonwoven mat;
a second secondary backing applicator that applies a second extrudate to an outer surface of the second nonwoven mat; and
a second extrudate press mechanism comprising one or more rollers that press the second extrudate through the second nonwoven mat such that the second extrudate encapsulates the outer surface of the second nonwoven mat, preferably the system further comprising a cap layer mechanism comprising one or more rollers that apply a fleece or felt layer to an outer surface of the second extrudate such that the carpet tile includes an outer fleece or felt layer positioned opposite the pile fabric.

20. A reinforced pile fabric comprising:
a plurality of yarns;
a primary backing;
a nonwoven mat that is positioned directly adjacent to the plurality of yarns and the primary backing, the nonwoven mat including a plurality of entangled fibers and a binder that bonds or adheres the entangled fibers together; and
a latex precoat applied to the plurality of yarns, primary backing, and nonwoven mat to couple or adhere the plurality of yarns, primary backing, and nonwoven mat together;
wherein the latex precoat is saturated through the nonwoven mat to couple or adhere the plurality of yarns, primary backing, and nonwoven mat together;
wherein at least some of the fibers of the nonwoven mat directly contact at least some of the yarns and/or the primary backing.

21. The reinforced pile fabric as claimed in claim 20, wherein a majority of the latex precoat material is positioned on a bottom surface of the nonwoven mat that is opposite to a top surface of the nonwoven mat that directly contact at least some of the yarns and/or the primary backing.

22. The reinforced pile fabric as claimed in claim 20 or 21, wherein a majority of the latex precoat material is positioned between the nonwoven mat and the yarns and primary backing.

23. The reinforced pile fabric as claimed in one or more of claims 20 to 22, wherein the nonwoven mat has a basis weight of less than 1 Ib/sq and has an air permeability of between 600 cfm/ft2 at 50 Pa and 2500 cfm/ft2 at 50 Pa.

24. The reinforced pile fabric as claimed in one or more of claims 20 to 23, wherein the nonwoven mat has a thickness of between 6 mil and 22 mil.

25. The reinforced pile fabric as claimed in one or more of claims 20 to 24, wherein the binder applied to the nonwoven mat is an emulsion binder.

26. The reinforced pile fabric as claimed in one or more of claims 20 to 25, wherein the reinforced pile fabric is free of a thermoplastic secondary backing,

27. A reinforced pile fabric forming system comprising:
a Greige goods delivery mechanism comprising one or more rollers that provide Greige goods, the Greige goods including:
a plurality of yarns; and
a primary backing;
a reinforcement delivery mechanism comprising one or more rollers that provide a nonwoven mat adjacent to the Greige goods, the nonwoven mat including:
a plurality of entangled fibers; and
a binder that bonds or adheres the entangled fibers together;
a precoat applicator that applies a latex precoat to the Greige goods and nonwoven mat;
a press mechanism comprising one or more rollers that press the Greige goods, the nonwoven mat, and the latex precoat so that the latex precoat saturates the nonwoven mat and a lower surface of the Greige goods; and
an oven or heater that is configured to cure the latex precoat and thereby couple or adhere the Greige goods and nonwoven mat together;
wherein at least some of the fibers of the nonwoven mat directly contact the plurality of yarns and/or primary backing of the Greige goods.

28. The reinforced pile fabric forming system as claimed in claim 27, wherein the precoat applicator is positioned so that the latex precoat is applied between the Greige goods and the nonwoven mat.

29. The reinforced pile fabric forming system as claimed in claim 27 or 28, wherein the precoat applicator is positioned so that the latex precoat is applied to a lower surface of the nonwoven mat that is opposite an upper surface that directly contacts the Greige goods.

30. A method of forming a reinforced pile fabric, the method comprising:
providing Greige goods that include:
a plurality of yarns; and
a primary backing;
positioning a nonwoven mat adjacent to the Greige goods, the nonwoven mat including:
a plurality of entangled fibers; and
a binder that bonds or adheres the entangled fibers together;
applying a latex precoat to the Greige goods and nonwoven mat;
pressing the Greige goods, the nonwoven mat, and the latex precoat so that the latex precoat saturates the nonwoven mat and a lower surface of the Greige goods; and
curing the latex precoat to thereby couple or adhere the Greige goods and nonwoven mat together;
wherein at least some of the fibers of the nonwoven mat directly contact the plurality of yarns and/or primary backing of the Greige goods.

31. The method as claimed in claim 30, wherein the latex precoat is applied between the Greige goods and the nonwoven mat.

32. The method as claimed in claim 30 or 31, wherein the latex precoat is applied to a lower surface of the nonwoven mat that is opposite an upper surface that directly contacts the Greige goods.
